(19) Europäisches Patentamt European Patent Office Office européen des brevets

(11) **EP 1 942 548 B1**

(12) **EUROPEAN PATENT SPECIFICATION**

(45) Date of publication and mention of the grant of the patent:
**27.07.2011 Bulletin 2011/30**

(51) Int Cl.:
*H01M 10/34* *(2006.01)*     *H01M 10/04* *(2006.01)*
*H01M 4/52* *(2010.01)*      *H01M 2/16* *(2006.01)*
*H01M 4/32* *(2006.01)*      *H01M 4/38* *(2006.01)*

(21) Application number: **06822071.4**

(22) Date of filing: **23.10.2006**

(86) International application number:
**PCT/JP2006/321060**

(87) International publication number:
**WO 2007/049558 (03.05.2007 Gazette 2007/18)**

(54) **NICKEL-METAL HYDRIDE BATTERY**

NICKEL-METALLHYDRID-BATTERIE

ACCUMULATEUR A HYDRURE METALLIQUE DE NICKEL

(84) Designated Contracting States:
**DE FR GB**

(30) Priority: **28.10.2005 JP 2005314495**
**28.09.2006 JP 2006264613**

(43) Date of publication of application:
**09.07.2008 Bulletin 2008/28**

(73) Proprietor: **SANYO ELECTRIC CO., LTD.**
**Moriguchi-shi, Osaka 570-0083 (JP)**

(72) Inventors:
• **IZUMI, Koji**
**Moriguchi-shi, Osaka 570-8677 (JP)**

• **MAEDA, Taishi**
**Moriguchi-shi, Osaka 570-8677 (JP)**
• **KIHARA, Masaru**
**Moriguchi-shi, Osaka 570-8677 (JP)**
• **ENDO, Takahiro**
**Moriguchi-shi, Osaka 570-8677 (JP)**

(74) Representative: **Glawe, Delfs, Moll**
**Patent- und Rechtsanwälte**
**Postfach 26 01 62**
**80058 München (DE)**

(56) References cited:
JP-A- 09 139 230     JP-A- 2002 075 343
JP-A- 2002 343 328   JP-A- 2004 221 057
JP-A- 2004 296 299

**Description**

**Technical Field**

This invention relates to a nickel-metal hydride rechargeable cell.

**Background Art**

The nickel-metal hydride rechargeable cell can have a high capacity and therefore has a wide range of applications. The nickel-metal hydride rechargeable cell, however, tends to decrease in remaining capacity due to self-discharge, and occasionally, they have to be freshly recharged when used some time after being charged.

In order to alleviate such problems connected with self-discharge, for example the nickel-metal hydride rechargeable cell disclosed in Japanese Unexamined Patent Publication No. Sho 62-115657 uses a separator made of non-woven fabric of sulfonated polyolefin-based resin.

The nickel-metal hydride rechargeable cell using such separator as disclosed in the above-mentioned publication does, however, not achieve a sufficient reduction in self-discharge.

Thus, the inventors of this application have developed a new nickel-metal hydride rechargeable cell having self-discharge reduced for a long period of time. This new battery has a reduced self-discharge, to be sure, but suffers a drop in operating voltage when used some time after being charged.

When a battery that has dropped in operating voltage is used as a power source for an electric or electronic device, if the operating voltage of the cell is lower than discharge cut voltage (discharge termination voltage), which is set for each device, the device does not work normally. Thus, after all, the cell needs recharging immediately before use. This can happen especially to devices requiring a high-rate discharge from a power source, such as DSCs (digital still cameras). In DSCs, the discharge cut voltage is set to 1.08V, for example.

Further, even if the device works, if the device is designed to detect the remaining capacity of the cell on the basis of the operating voltage thereof and indicate a decrease in remaining capacity on a liquid crystal panel or by means of LEDs, it may be indicated as if the remaining capacity had decreased to an insufficient level, although it is actually sufficient. In DSCs, this can happen when the operating voltage drops to lower than 1.205V, for example.

Thus, regarding the nickel-metal hydride rechargeable cell, not only reduction of self-discharge but also reduction of drop of operating voltage is desired.

**Disclosure of the Invention**

The primary object of the present invention is to provide a nickel-metal hydride rechargeable cell which is reduced in self-discharge for a long period of time, and also reduced in drop of operating voltage.

Through the studies conducted in order to achieve the above object, the inventors have reached the present invention as taught in the claims.

The present invention provides a nickel-metal hydride rechargeable cell including an electrode assembly accommodated in a case with an alkaline electrolyte solution. The electrode assembly includes a positive electrode plate, a negative electrode plate and a separator rolled together. The positive electrode plate contains nickel hydroxide particles, a coating layer covering at least a part of a surface of each nickel hydroxide particle and mainly composed of a cobalt compound having an average valence of cobalt more than 2, and an additive containing Nb and Y and distributed among the nickel hydroxide particles. The negative electrode plate contains a hydrogen storage alloy of composition expressed by the general formula:

$$((PrNd)_\alpha Ln_{1-\alpha})_{1-\beta} Mg_\beta Ni_{\gamma-\delta-\varepsilon} Al_\delta T_\varepsilon$$

(where Ln represents at least one element chosen from the group consisting of La, Ce, Pm, Sm, Eu, Gd, Tb, Dy, Ho, Er, Tm, Yb, Lu, Ca, Sr, Sc, Y, Ti, Zr and Hf, T represents at least one element chosen from the group consisting of V, Nb, Ta, Cr, Mo, Mn, Fe, Co, Zn, Ga, Sn, In, Cu, Si, P and B, and subscripts $\alpha$, $\beta$, $\gamma$, $\delta$ and $\varepsilon$ represent numbers satisfying $0.7<\alpha$, $0.05<\beta<0.15$, $3.0\leq\gamma\leq4.2$, $0.15\leq\delta\leq0.30$ and $0\leq\varepsilon\leq0.20$, respectively), and having a Co content of equal to or less than 2.0% by mass. The separator contains fiber having a sulfo group, and the alkaline electrolyte solution contains sodium hydroxide as a main solute.

The present invention provides a nickel-metal hydride rechargeable cell including an electrode assembly accommodated in a case with an alkaline electrolyte solution. The electrode assembly includes a positive electrode plate, a negative electrode plate and a separator rolled together. The positive electrode plate contains nickel hydroxide particles, a coating layer covering at least a part of a surface of each nickel hydroxide particle and mainly composed of a cobalt compound having an average valence of cobalt more than 2, and an additive containing Nb and Y and distributed among the nickel hydroxide particles. The negative electrode plate contains a substrate with a nickel plating layer of $2\mu m$ or greater in thickness formed on a surface, and hydrogen storage alloy particles having a Co content of equal to or less than 2.0% by mass. The separator contains fiber having a sulfo group, and the alkaline electrolyte solution contains sodium hydroxide as a main solute.

The present invention provides a nickel-metal hydride rechargeable cell including an electrode assembly accommodated in a case with an alkaline electrolyte solution. The electrode assembly includes a positive electrode plate, a negative electrode plate and a separator rolled together. The positive electrode plate contains nickel hydroxide particles, a coating layer covering at least a part of a surface of each nickel hydroxide particle and mainly composed of a cobalt compound having an average valence of cobalt more than 2, and an additive containing Nb and Y and distributed among the nickel hydroxide particles. The negative electrode plate contains a hydrogen storage alloy having a Co content of equal to or less than 2.0% by mass, and the separator contains fiber having a sulfo group. The alkaline electrolyte solution contains 0 to 1 gram-equivalent of potassium hydroxide, 5 to 7 gram-equivalent of sodium hydroxide and 0.3 to 1.3 gram-equivalent of lithium hydroxide, per liter.

The present invention provides a nickel-metal hydride rechargeable cell including an electrode assembly accommodated in a case with an alkaline electrolyte solution. The electrode assembly includes a positive electrode plate, a negative electrode plate and a separator rolled together, and the cell satisfies the relationship $N \geq [0.5 \times Dmax\text{-}2.65]$, where Dmax is the maximum outside diameter of an exterior can used as the case, and N is the number of turns of the positive electrode rolled ([] is the symbol for floor function). The positive electrode plate contains nickel hydroxide particles, a coating layer covering at least a part of a surface of each nickel hydroxide particle and mainly composed of a cobalt compound having an average valence of cobalt more than 2, and an additive containing Nb and Y and distributed among the nickel hydroxide particles. The negative electrode plate contains a hydrogen storage alloy having a Co content of equal to or less than 2.0% by mass, and the separator contains fiber having a sulfo group. The alkaline electrolyte solution contains sodium hydroxide as a main solute.

The nickel-metal hydride batteries according to the present invention have self-discharge reduced for a long period of time, and therefore do not need recharging in order to be usable, even some period of time after charged.

Further, the drops in operating voltages of the above-described batteries are suppressed for a long period of time. Thus, when these batteries are used as a power source for an electric or electronic device, the operating voltages of the batteries once charged does not drop to lower than the discharge cut voltage for the electric or electronic device, even some period of time after charging, so that the batteries do not need recharging before use.

Thus, the above-described batteries are convenient for the user, and at the same time environmentally-friendly, since the reduced self-discharge leads to a reduction in wasteful power consumption.

## Brief Description of the Drawings

FIG. 1 is a perspective cutaway view showing an embodiment of nickel-metal hydride rechargeable cell according to the present invention, where, within the circle, part of the cross-section of a positive electrode is schematically shown on an enlarged scale.

FIG. 2 is a cross-sectional view schematically showing the transverse cross-section of an electrode assembly used in the cell of FIG. 1.

FIG. 3 is plan view schematically showing a negative-electrode substrate constituting a negative electrode plate used in the cell of FIG. 1.

FIG. 4 is a diagram showing part of the cross-section of the negative-electrode substrate of FIG. 3.

## Best Mode of Carrying out the Invention

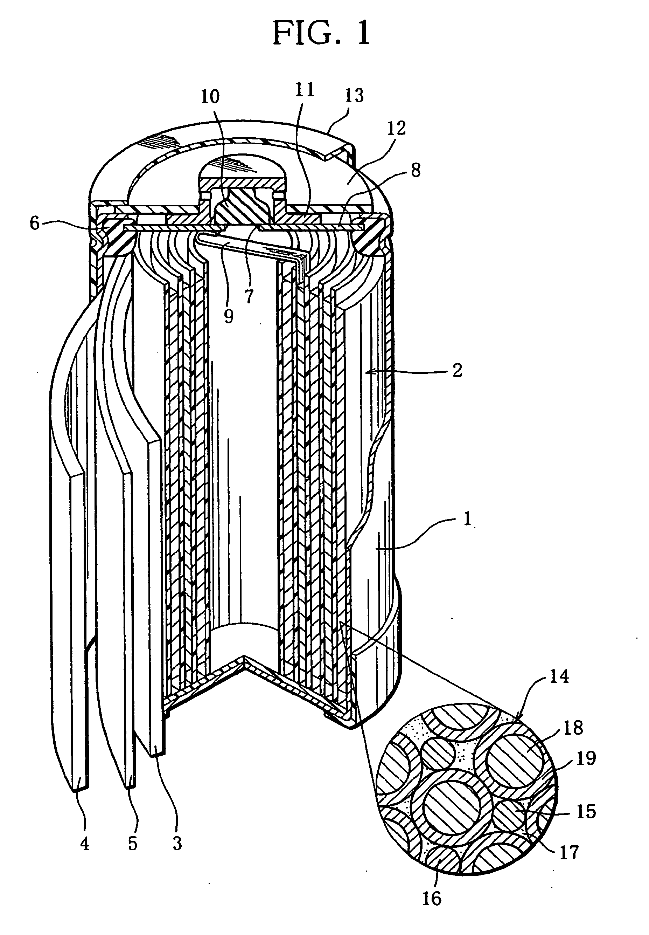

FIG. 1 shows an embodiment of nickel-metal hydride rechargeable cell according to the present invention.

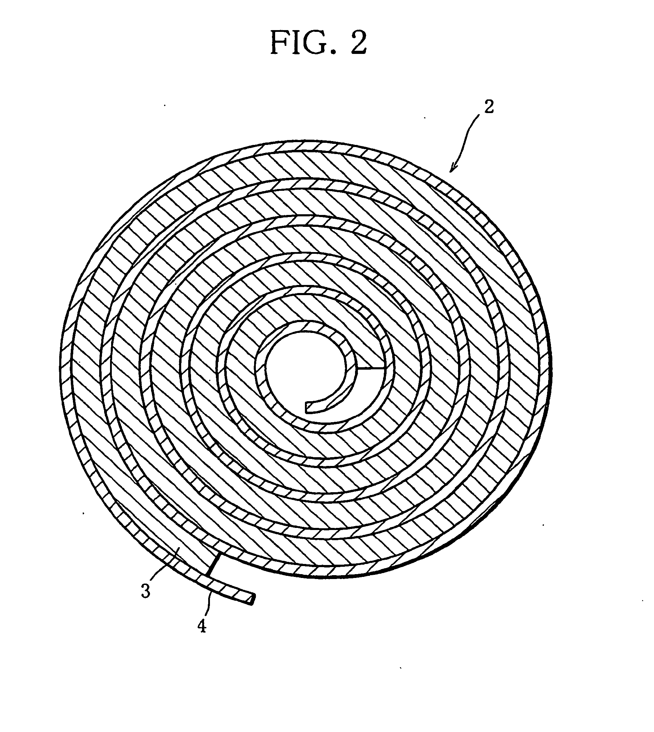

This battery has an exterior can 1 in the shape of a cylinder closed at the bottom and open at the top. In the exterior can 1, an electrode assembly 2 is accommodated with an alkaline electrolyte solution (not shown). The electrode assembly 2 includes a positive electrode plate 3, a negative electrode plate 4 and a separator 5 rolled into a spiral shape, where the separator 5 is inserted between the electrode plates 3, 4. As seen from FIG. 2 which schematically shows the transverse cross-section of the electrode assembly 2, the outermost cylindrical part of the electrode assembly 2 is formed of the outer end part of the negative electrode plate 4 rolled, and the negative electrode plate 4 is electrically connected with the inner wall surface of the exterior can 1.

The cell satisfies the relationship $N \geq [0.5 \times Dmax\text{-}2.65]$, where Dmax is the maximum outside diameter of the exterior can 1, and N is the number of turns of the positive electrode plate rolled ([] is the symbol for floor function). When the maximum outside diameter of the exterior can 1 is 14.25mm, the number of turns of the positive electrode plate 3 in the electrode assembly 2 is 4 or greater.

It is to be noted that in FIG. 2, the separator 5 is omitted so that lines may not become complicated.

Referring back to FIG. 1, within the opening at the top of the exterior can 1, a disk-shaped cover plate 8 with a gas release hole 7 in the center is arranged with a ringshaped insulating gasket 6. The insulating gasket 6 and the cover plate 8 are fixed by caulking the rim of the exterior can 1 surrounding the opening. A positive-electrode lead 9 is arranged between the positive electrode plate 3 of the electrode assembly 2 and the inner surface of the cover plate 8 to connect them electrically. On the outer surface of the cover plate 8, a valve 10 made of rubber is arranged to close the gas release hole 7, and a positive-electrode terminal 11 in the shape of a cylinder with a flange is fitted to cover the valve 10.

Further, an annular insulating plate 12 is arranged on the rim of the exterior can 1 surrounding the opening, and the positive-electrode terminal 11 projects through the insulating plate 12 outward. Reference sign 13 indicates an exterior tube. The exterior tube 13 covers the peripheral part of the insulating plate 12, the outer cylindrical surface of the exterior can 1 and the peripheral part of the bottom of the exterior can 1.

Next, the positive electrode plate 3, the negative electrode plate 4, the separator 5 and the alkaline electrolyte solution will be described more in detail.

The positive electrode plate 3 is constituted by a conductive positive-electrode substrate and a positive-electrode mixture held on the positive-electrode substrate.

The positive-electrode substrate is a porous substrate having a three-dimensional network structure. As such positive-electrode substrate, for example an Ni porous substrate can be used. The Ni porous substrate can be obtained by nickel-plating a substrate molded from foamed urethane and having a three-dimensional network structure, and then subjecting the nickel-plated foamed-urethane substrate to roasting and a reduction treatment.

As shown in the circle of FIG. 1, the positive-electrode mixture includes composite particles 14 each containing nickel hydroxide, which is a positive-electrode active material, as the main constituent (main substance), Nb-based particles 15 each containing Nb as the main constituent, Y-based particles 16 each containing Y as the main constituent, and a binding agent 17.

More specifically, the central part (core) of the composite particle 14 consists of a nickel hydroxide particle 18 approximately spherical in shape. The nickel hydroxide particle 18 may be a solid solution containing either or both of cobalt and zinc. Further, the nickel hydroxide constituting the nickel hydroxide particle 18 may be high-order nickel hydroxide having an average valence of nickel more than 2.

The entire surface or at least a part of the surface of the nickel hydroxide particle 18 is covered with a coating layer 19 mainly composed of a cobalt compound. The cobalt compound constituting the coating layer 19 is a high-order cobalt compound, specifically cobalt oxide or cobalt hydroxide having an average valence of cobalt more than 2. The cobalt compound constituting the coating layer 19 may contain alkaline cations such as Na, K or Li ions, and may have a distorted crystal structure.

As the Nb-based particles 15, for example particles of metal Nb or of Nb compounds can be used, where the Nb compounds can be $Nb_2O_5$ and $NbF_5$, for example.

As the Y-based particles 16, for example particles of metal Y or of Y compounds can be used, where the Y compounds can be $Y_2O_3$ and $YF_3$, for example.

It is also possible to use particles of a compound containing both Nb and Y as main constituents, instead of using the Nb-based particles 15 and the Y-based particles 16. To sum up, what is required is that an additive containing Nb and Y should be distributed among the composite particles 14.

As the binding agent 17, for example carboxymethylcellulose, methylcellulose, a PTFE dispersion, or an HPC dispersion can be used.

The positive electrode plate 3 described above can be produced, for example as follows: First, a positive-electrode slurry is prepared by mixing composite particles 14, Nb-based particles 15, Y-based particles 16, a binding agent 17 and water. Then, the positive-electrode slurry is applied to and filled into a positive-electrode substrate. After the positive-electrode slurry dries, the positive-electrode substrate is subjected to rolling and cutting, so that the positive electrode plate 3 is obtained.

The composite particles 14 are produced, for example by subjecting nickel hydroxide particles 18 covered with a cobalt compound, to an alkaline heat treatment.

More specifically, in the alkaline heat treatment, an alikaline aqueous solution is sprayed to the nickel hydroxide particles 18 covered with a cobalt compound, while the particles are being stirred in a heated atmosphere. This treatment causes the cobalt compound covering the nickel hydroxide particles 18 to change into a high-order cobalt compound.

It is to be noted that the alkaline heat treatment distorts the crystal structure of the cobalt compound constituting the coating layer 19, and causes alkaline cations such as Li, Na or K ions, the type of which corresponds to the type of the alkaline aqueous solution, to be contained in the cobalt compound.

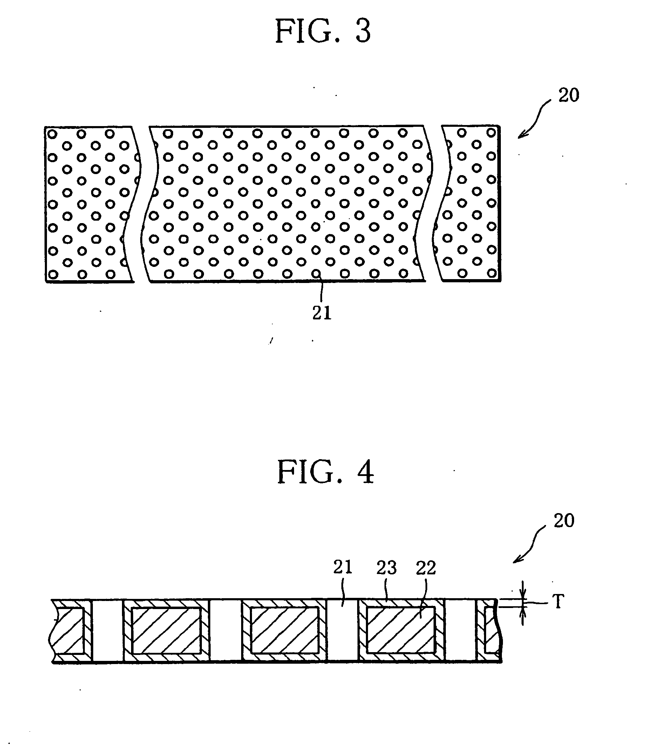

The negative electrode plate 4 constituted by a conductive negative-electrode substrate 20, schematically shown in FIG. 3, and a negative-electrode mixture held on the negative-electrode substrate 20.

The negative-electrode substrate 20 is in the shape of a sheet with through-holes 21 distributed all over, in a specified arrangement. As shown in FIG. 4 on an enlarged scale, the negative-electrode substrate 20 consists of an iron substrate 22 with a nickel plating layer 23 of $2\mu m$ or greater in thickness T covering all the surfaces of the iron substrate 22. As such negative-electrode substrate 20, for example a nickel-plated perforated sheet or a nickel-plated expanded-metal sheet can be used.

The negative-electrode mixture includes hydrogen storage alloy particles, a binding agent, and as necessary, a conducting agent. As the binding agent, for example sodium polyacrylate may be used in addition to the same binding agent as used for the positive-electrode mixture. As the conducting agent, for example carbon powder can be used. The negative-electrode mixture is filled into the through-holes 21 of the negative-electrode substrate 20 and applied to form a layer on each side of the negative-electrode substrate 20.

The hydrogen storage alloy particles for the negative electrode plate 4 are particles of a hydrogen storage alloy having a Co content of equal to or less than 2.0% by mass and a composition expressed by general formula (I):

$$((PrNd)_\alpha Ln_{1-\alpha})_{1-\beta}Mg_\beta Ni_{\gamma-\delta-\varepsilon}Al_\delta T_\varepsilon$$

In formula (I), Ln represents at least one element chosen from the group consisting of La, Ce, Pm, Sm, Eu, Gd, Tb, Dy, Ho, Er, Tm, Yb, Lu, Ca, Sr, Sc, Y, Ti, Zr and Hf, T represents at least one element chosen from the group consisting of V, Nb, Ta, Cr, Mo, Mn, Fe, Co, Zn, Ga, Sn, In, Cu, Si, P and B, and subscripts $\alpha$, $\beta$, $\gamma$, $\delta$ and $\varepsilon$ represent numbers satisfying $0.7 < \alpha$, $0.05 < \beta < 0.15$, $3.0 \le \gamma \le 4.2$, $0.15 \le \delta \le 0.30$ and $0 \le \varepsilon \le 0.20$, respectively.

This hydrogen storage alloy is a rare earth-Mg-Ni-based hydrogen storage alloy having a $Ce_2Ni_7$-type or similar crystal structure.

Subscript $\alpha$ represents the proportion of the sum of Pr and Nd in the hydrogen storage alloy, where the hydrogen storage alloy may contain only one of the elements Pr and Nd.

The negative electrode plate 4 described above can be produced, for example as follows: First, a negative-electrode slurry is prepared from hydrogen storage alloy particles, a binding agent, water, and as necessary, a conducting agent. Then, the negative-electrode slurry is applied to a negative-electrode substrate. After the negative-electrode slurry dries, the negative-electrode substrate is subjected to rolling and cutting, so that the negative electrode plate 4 is obtained.

The separator 5 is made of non-woven fabric mainly composed of fiber of polyolefin-based synthetic resin with a sulfo group ($-SO_3H$) added. As the polyolefin-based synthetic resin, for example synthetic resins such as polyethylene and polypropylene can be used. The sulfo group can be added by treating the non-woven fabric with acid containing a sulfate group such as sulfuric acid, fuming sulfuric acid or the like.

The alkaline electrolyte solution is a Na-rich caustic alkaline aqueous solution containing sodium hydroxide (Na OH) as the main solute. More specifically, the alkaline electrolyte solution contains 0 or more but equal to or less than 1 gram-equivalent of potassium hydroxide (KOH), 5 or more but equal to or less than 7 gram-equivalent of NaOH, and 0.3 or more but equal to or less than 1.3 gram-equivalent of lithium hydroxide (LiOH), per liter.

In the above-described nickel-metal hydride rechargeable cell, the cobalt compound constituting the coating layer 19 has an average valence of cobalt more than 2, the Nb-based particles 15 and the Y-based particles 16 are distributed among the composite particles 14, the hydrogen storage alloy constituting the negative electrode plate 4 has a Co content of equal to or less than 2.0% by mass, the separator 5 contains fiber having a sulfo group, and the alkaline electrolyte solution contains NaOH as the main solute. This results in an excellent self-discharge characteristic, although the reason is not clear. Specifically, when left unused after charging, the self-discharge of the cell is effectively suppressed for a long period of time.

Further, the above-described nickel-metal hydride rechargeable cell satisfies conditions 1 to 4 set forth below. This results in that the drop in operating voltage of the cell is effectively suppressed when left unused after charging, although the reason is not clear.

Condition 1: The cell satisfies the relationship $N \ge [0.5 \times Dmax - 2.65]$, where Dmax is the maximum outside diameter of the exterior can 1, and N is the number of turns of the positive electrode plate 3 rolled ([] is the symbol for floor function).

Condition 2: The nickel plating layer 23 of the negative-electrode substrate 20 is $2\mu m$ or greater in thickness.

Condition 3: The hydrogen storage alloy has a composition expressed by general formula (I).

Condition 4: The alkaline electrolyte solution contains 0 or more but equal to or less than 1 gram-equivalent of potassium hydroxide, 5 or more but equal to or less than 7 gram-equivalent of sodium hydroxide, and 0.3 or more but equal to or less than 1.3 gram-equivalent of lithium hydroxide, per liter.

[Examples]

Example 1

1. Preparation of negative electrode plate

Metal materials were measured out to produce the composition $La_{0.10}Ce_{0.05}Pr_{0.35}Nd_{0.05}Mg_{0.10}Ni_{3.70}Al_{0.22}$ and mixed. The mixture was melted in a high-frequency melting furnace and formed into an ingot. The ingot was heated in an argon atmosphere of temperature 1000°C for 10 hours, thereby causing the crystal structure in the ingot to change into a $Ce_2Ni_7$-type or similar structure. Then, the ingot was subjected to mechanical pulverization in an inert atmosphere and then sieving, so that rare earth-Mg-Ni-based hydrogen storage alloy particles of the above composition were obtained. The rare earth-Mg-Ni-based hydrogen storage alloy particles obtained had an average particle size 50$\mu$m. Here, the average particle diameter was defined as a particle size corresponding to 50 percent in weight integration in the particle size distribution of the rare-earth-Mg-Ni-based hydrogen storage alloy particles that was measured with a laser diffraction/ scattering particle size distribution analyzer.

To 100 mass-parts of the alloy particles obtained, 0.5 mass-parts of sodium polyacrylate, 0.12 mass-parts of carboxymethylcellulose and 0.5 mass-parts (solid basis) of a PTFE dispersion (medium: water, specific gravity 1.5, 60 mass % of solids), 1.0 mass-part of carbon black and 30 mass-parts of water were added, and all the materials were mixed, so that a negative-electrode slurry was obtained. Then, the negative-electrode slurry was applied to a perforated iron sheet with a nickel plating layer of 3$\mu$m in average thickness. After the slurry dried, the perforated sheet with the slurry applied on was subjected to rolling and cutting, so that a negative electrode plate for size AA was obtained.

**2. Preparation of positive electrode plate**

A mixed aqueous solution of nickel sulfate, zinc sulfate and cobalt sulfate was prepared to have an Ni:Zn:Co reduced mass ratio of 96:3:1. While the mixed solution was being stirred, an aqueous solution of sodium hydroxide was gradually added to it, thereby causing both solutions to react. During the reaction, the pH of the mixture of both solutions was maintained at 13 to 14, thereby causing nickel hydroxide particles, approximately spherical in shape, to be precipitated in the mixture.

Next, an aqueous solution of cobalt sulfate was added to the resulting mixed solution with the nickel hydroxide particles precipitated, thereby causing both solutions to react. During the reaction, the pH of the mixture of both solutions was maintained at 9 to 10, thereby causing cobalt hydroxide to be deposited on the surface of each nickel hydroxide particle previously precipitated and approximately spherical in shape. The nickel hydroxide particles each covered with cobalt hydroxide and approximately spherical in shape were washed with ten times as much pure water, three times, then dehydrated, and then dried, so that the nickel hydride particles each covered with a coating layer of cobalt hydroxide were obtained.

Then, the particles obtained were subjected to an alkaline heat treatment. Specifically, while the nickel hydroxide particles each covered with a coating layer of cobalt hydroxide were being stirred in a heated atmosphere of temperature 100°C, a 25 mass % sodium hydroxide aqueous solution was sprayed to the particles for 0.5 hours. This treatment caused the cobalt hydroxide covering each nickel hydride particle to be oxidized so that the cobalt hydroxide changed into a high-order cobalt compound.

Then, the particles oxidized were washed with ten times as much pure water, three times, then dehydrated, and then dried, so that composite particles, each consisting of a high-order nickel hydroxide particle covered with a coating layer of a high-order cobalt compound having a distorted crystal structure and containing alkaline cations, were obtained.

Then, 100 mass-parts of the composite particles, 0.3 mass-parts of diniobium pentoxide ($Nb_2O_5$) powder, 0.9 mass-parts of diyttrium trioxide ($Y_2O_3$) powder, and 0.3 mass-parts of an HPC (hydroxylpropylcellulose) dispersion (medium: 40 mass-parts of water, 60 mass parts of solids) were mixed to cause the composite particles, $Nb_2O_5$ powder and $Y_2O_3$ powder to be dispersed uniformly, so that a positive-electrode slurry was obtained.

The positive-electrode slurry was packed in an Ni porous substrate, and after the positive-electrode slurry dried, the Ni porous substrate was subjected to pressing and cutting, so that a non-sintered positive electrode plate for size AA was obtained. 3. Preparation of separator

A piece of non-woven fabric composed of polypropylene resin fiber, 45 g/m$^2$ in basis weight (areal weight) and 0.2 mm in thickness, was prepared. This piece of non-woven fabric was subjected to a sulfonation treatment using fuming sulfuric acid, so that a separator having a sulfo group was obtained.

4. Preparation of alkaline electrolyte solution

An Na-rich alkaline electrolyte solution was prepared by mixing a potassium hydroxide aqueous solution, a sodium hydroxide aqueous solution and a lithium hydroxide aqueous solution so that the resulting alkaline electrolyte solution would contain 0.5 gram-equivalent of potassium hydroxide, 6.0 gram-equivalent of sodium hydroxide and 1.0 gram-equivalent of lithium hydroxide, per liter.

5. Assembly of nickel-metal hydride rechargeable cell

An electrode assembly was made by rolling the obtained positive electrode plate, negative electrode plate and separator, arranged such that the separator was between the electrode plates, into a spiral shape so that the number of turns of the positive electrode plate would be 4. The electrode assembly obtained was placed in an exterior can of 14.25mm in outside diameter and 0.17mm in wall thickness, a predetermined fitting process was performed, and then the Na-rich alkaline electrolyte solution was injected into the exterior can. Then, the opening at the top of the exterior can was closed with a cover plate, etc., so that a sealed cylindrical AA-size nickel-metal hydride rechargeable cell was obtained as example 1.

Comparative examples 1, 2

Nickel-metal hydride batteries as comparative examples 1, 2 were assembled in a similar manner as example 1, except that one or more of below-mentioned changes (i) to (vii) were made as shown in Table 1.

(i) Nickel hydroxide particles covered with a coating layer of a cobalt compound are not subjected to an alkaline heat treatment so that the cobalt compound constituting the coating layer will have an average valence of cobalt 2.
(ii) Neither $Nb_2O_5$ powder nor $Y_2O_3$ powder is added to prepare a positive-electrode slurry.
(iii) To prepare a negative electrode plate, an iron perforated sheet with a nickel plating layer of not $3\mu m$ but $1\mu m$ in thickness is used.
(iv) To prepare a negative electrode plate, an $AB_5$-type hydrogen storage alloy of composition $Mm_{1.0}Ni_{3.65}Co_{0.75}Mn_{0.35}Al_{0.30}$ is used.
(v) Non-woven fabric is subjected to not a sulfonation treatment but a fluorine gas treatment. The fluorine gas treatment means a treatment of the non-woven fabric with a mixture gas obtained by adding an oxygen gas, a carbon dioxide gas, a sulfur dioxide gas and the like to a fluorine gas diluted with an inert gas.
(vi) An electrode assembly is made so that the number of turns of a positive electrode plate will be 3.
(vii) Not an Na-rich alkaline electrolyte solution but a K-rich alkaline electrolyte solution is used. Specifically, a potassium hydroxide aqueous solution, a sodium hydroxide aqueous solution and a lithium hydroxide aqueous solution are mixed so that the resulting alkaline electrolyte solution will contain 6.0 gram-equivalent of potassium hydroxide, 1.0 gram-equivalent of sodium hydroxide and 0.2 gram-equivalent of lithium hydroxide, per liter.

6. Evaluation of remaining capacity ratio and operating voltage of battery

After initial activation, battery example 1 and battery comparative-examples 1, 2 were each subjected to dV-controlled time charging at a current of 1 ItA in an environment of temperature 25 °C. Then, after a 60 minutes' rest, each battery was discharged at a current of 740 mA, where discharge capacity was measured as full charge capacity.

(1) 90 °C after-3-month remaining capacity ratio and operating voltage

The batteries which had been discharged to measure the full charge capacity were each subjected to dV-controlled charging at a current of 1 ItA in an environment of 25 °C. Then, after left in an environment of 40 °C for 3 months, each battery was discharged at a current of 740 mA in an environment of 25 °C, where discharge capacity was measured as remaining capacity together with discharge operating voltage (median voltage). The ratio of the remaining capacity to the full charge capacity, which is called 40°C after-3-month remaining capacity ratio, and the discharge voltage are shown in Table 2.

(2) 25°C after-1-year remaining capacity ratio and operating voltage

The batteries which had been discharged to measure the full charge capacity were each subjected to dV-controlled charging at a current of 1 ItA in an environment of temperature 25 °C. Then, after left in an environment of 25°C for 1 year (365 days), each battery was discharged at a current of 740 mA in an environment of 25 °C, where discharge capacity was measured together with discharge operating voltage (median voltage). The ratio of the remaining capacity to the full charge capacity, which is called 25°C after-1-year remaining capacity ratio, and the discharge voltage are shown in Table 2.

From Table 2, it is recognized that battery example 1 is higher in remaining capacity ratio and operating voltage (median voltage) than battery comparative-examples 1, 2.

[Table 1]

| | positive electrode plate | | Negative electrode plate | | | separator | Electrode assembly | |
|---|---|---|---|---|---|---|---|---|
| | average valence of Co in coating layer | $Nb_2O_5$ powder & $Y_2O_3$ powder | hydrogen storage alloy | Thickness of plating layer ($\mu$m) | pretreatment | number of turns of positive electrode plate | Electrolyte solution |
| Ex. 1 | greater than 2 | added | $La_{0.10}Ce_{0.50}Pr_{0.35}Nd_{0.50}Mg_{0.10}Ni_{3.70}Al_{0.22}$ | 3 | sulfonation | 4 | Na-rich |
| Com. Ex. 1 | 2 | not added | $Mm_{1.0}Ni_{3.65}Co_{0.75}Mn_{0.35}Al_{0.30}$ | 1 | fluorine gas | 3 | K-rich |
| Com. Ex. 2 | greater than 2 | added | $Mm_{1.0}Ni_{3.65}Co_{0.75}Mn_{0.35}Al_{0.30}$ | 1 | fluorine gas | 3 | K-rich |

EP 1 942 548 B1

[Table 2]

| | battery evaluation | | | |
|---|---|---|---|---|
| | 40°C after 3 months | | 25°C after 1 year | |
| | remaining capacity ratio (%) | operating voltage (V) | remaining capacity ratio (%) | operating voltage (V) |
| Ex.1 | 81.5 | 1.211 | 84.1 | 1.219 |
| Com. Ex. 1 | 10.2 | 1.066 | 10.8 | 1.068 |
| Com. Ex. 2 | 61.0 | 1.111 | 63.3 | 1.113 |

The present invention is not limited to the above-described embodiment and example but can be modified in various ways. For example, although the described positive electrode plate 3 contains Nb-based particles 15 and Y-based particles 16 as an additive distributed among the composite particles 14, another additive can be contained. It is to be noted that when particles containing Co are contained as an additive, the mass of Co contained in the additive should desirably be equal to or less than 0.1% relative to the mass of nickel hydroxide contained in the positive electrode plate 3. The mass of Co contained in the additive being more than 0.1% relative to the mass of nickel hydroxide contained in the positive electrode plate 3 results in an inferior self-discharge characteristic of the cell.

Although the described embodiment of battery satisfies all of conditions 1 to 4, what is required is to satisfy at least one of conditions 1 to 4. It is more desirable to satisfy more conditions.

**Claims**

1. A nickel-metal hydride rechargeable cell including an electrode assembly accommodated in a case with an alkaline electrolyte solution, wherein
   the electrode assembly includes a positive electrode plate, a negative electrode plate and a separator rolled together,
   the positive electrode plate containing nickel hydroxide particles,
   a coating layer covering at least a part of a surface of each nickel hydroxide particle and mainly composed of a cobalt compound having an average valence of cobalt more than 2, and
   an additive containing Nb and Y and distributed among the nickel hydroxide particles,
   the negative electrode plate containing a hydrogen storage alloy of composition expressed by a general formula:

$$((PrNd)_{\alpha}Ln_{1-\alpha})_{1-\beta}Mg_{\beta}Ni_{\gamma-\delta-\epsilon}Al_{\delta}T_{\epsilon}$$

   (where Ln represents at least one element chosen from the group consisting of La, Ce, Pm, Sm, Eu, Gd, Tb, Dy, Ho, Er, Tm, Yb, Lu, Ca, Sr, Sc, Y, Ti, Zr and Hf, T represents at least one element chosen from the group consisting of V, Nb, Ta, Cr, Mo, Mn, Fe, Co, Zn, Ga, Sn, In, Cu, Si, P and B, and subscripts $\alpha$, $\beta$, $\gamma$, $\delta$ and $\epsilon$ represent numbers satisfying $0.7 < \alpha$, $0.05 < \beta < 0.15$, $3.0 \leq \gamma \leq 4.2$, $0.15 \leq \delta \leq 0.30$ and $0 \leq \epsilon \leq 0.20$, respectively), and having a Co content of equal to or less than 2.0% by mass,
   the separator containing fiber having a sulfo group,
   the alkaline electrolyte solution containing sodium hydroxide as a main solute.

2. The nickel-metal hydride rechargeable cell according to claim 1, wherein
   the negative electrode plate contains a substrate with a nickel plating layer of $2\mu$m or greater in thickness formed on a surface.

3. The nickel-metal hydride rechargeable cell according to claim 1, wherein
   the alkaline electrolyte solution contains 0 to 1 gram-equivalent of potassium hydroxide, 5 to 7 gram-equivalent of sodium hydroxide and 0.3 to 1.3 gram-equivalent of lithium hydroxide, per liter.

4. The nickel-metal hydride rechargeable cell according to claim 1, wherein

a relationship N≥[0.5×Dmax-2.65] is satisfied, where Dmax is a maximum outside diameter of an exterior can used as the case, and N is a number of turns of the positive electrode rolled ([] is a symbol for floor function).

5. A nickel-metal hydride rechargeable cell including an electrode assembly accommodated in a case with an alkaline electrolyte solution, wherein
the electrode assembly includes a positive electrode plate, a negative electrode plate and a separator rolled together,
the positive electrode plate containing nickel hydroxide particles,
a coating layer covering at least a part of a surface of each nickel hydroxide particle and mainly composed of a cobalt compound having an average valence of cobalt more than 2, and
an additive containing Nb and Y and distributed among the nickel hydroxide particles,
the negative electrode plate containing a substrate with a nickel plating layer of 2μm or greater in thickness formed on a surface, and
hydrogen storage alloy particles having a Co content of equal to or less than 2.0% by mass,
the separator containing fiber having a sulfo group, the alkaline electrolyte solution containing sodium hydroxide as a main solute.

6. The nickel-metal hydride rechargeable cell according to claim 2, wherein
the alkaline electrolyte solution contains 0 to 1 gram-equivalent of potassium hydroxide, 5 to 7 gram-equivalent of sodium hydroxide and 0.3 to 1.3 gram-equivalent of lithium hydroxide, per liter.

7. The nickel-metal hydride rechargeable cell according to claim 2, wherein
a relationship N≥[0.5×Dmax-2.65] is satisfied, where Dmax is a maximum outside diameter of an exterior can used as the case, and N is a number of turns of the positive electrode rolled ([] is a symbol for floor function).

8. A nickel-metal hydride rechargeable cell including an electrode assembly accommodated in a case with an alkaline electrolyte solution, wherein
the electrode assembly includes a positive electrode plate, a negative electrode plate and a separator rolled together,
the positive electrode plate containing nickel hydroxide particles,
a coating layer covering at least a part of a surface of each nickel hydroxide particle and mainly composed of a cobalt compound having an average valence of cobalt more than 2, and
an additive containing Nb and Y and distributed among the nickel hydroxide particles,
the negative electrode plate containing a hydrogen storage alloy having a Co content of equal to or less than 2.0% by mass,
the separator containing fiber having a sulfo group, the alkaline electrolyte solution containing 0 to 1 gram-equivalent of potassium hydroxide, 5 to 7 gram-equivalent of sodium hydroxide and 0.3 to 1.3 gram-equivalent of lithium hydroxide, per liter.

9. The nickel-metal hydride rechargeable cell according to claim 8, wherein
a relationship N≥[0.5×Dmax-2.65] is satisfied, where Dmax is a maximum outside diameter of an exterior can used as the case, and N is a number of turns of the positive electrode rolled ([] is a symbol for floor function).

10. A nickel-metal hydride rechargeable cell including an electrode assembly accommodated in a case with an alkaline electrolyte solution, wherein
the electrode assembly includes a positive electrode plate, a negative electrode plate and a separator rolled together,
a relationship N≥[0.5×Dmax-2.65] being satisfied, where Dmax is a maximum outside diameter of an exterior can used as the case, and N is a number of turns of the positive electrode rolled ([] is a symbol for floor function),
the positive electrode plate containing nickel hydroxide particles,
a coating layer covering at least a part of a surface of each nickel hydroxide particle and mainly composed of a cobalt compound having an average valence of cobalt more than 2, and
an additive containing Nb and Y and distributed among the nickel hydroxide particles,
the negative electrode plate containing a hydrogen storage alloy having a Co content of equal to or less than 2.0% by mass,
the separator containing fiber having a sulfo group, the alkaline electrolyte solution containing sodium hydroxide as a main solute.

**EP 1 942 548 B1**

**Patentansprüche**

1. Wiederaufladbare Nickelmetallhydridzelle, die eine Elektrodenanordnung einschließt, die in einem Gehäuse mit einer alkalischen Elektrolytlösung aufgenommen ist, wobei

   die Elektrodenanordnung eine positive Elektrodenplatte, eine negative Elektrodenplatte und einen Separator aufweist, die zusammen gewickelt sind,
   die positive Elektrodenplatte enthält
   Nickelhydroxidteilchen,
   eine Beschichtungsschicht, die mindestens einen Teil einer Oberfläche jedes Nickelhydroxidteilchens bedeckt und hauptsächlich aufgebaut ist aus einer Kobaltverbindung, die eine mittlere Wertigkeit von Kobalt größer als 2 aufweist und
   ein Additiv, das Nb und Y enthält und unter den Nickelhydroxidteilchen verteilt ist,
   die negative Elektrodenplatte eine Wasserstoffspeicherlegierung enthält mit einer Zusammensetzung, die durch eine allgemeine Formel ausgedrückt ist:

$$((PrNd)_\alpha Ln_{1-\alpha})_{1-\beta} Mg_\beta Ni_{\gamma-\delta-\varepsilon} Al_\delta T_\varepsilon)$$

   (wobei Ln mindestens ein Element ausgewählt aus der Gruppe bestehend aus La, Ce, Pm, Sm, Eu, Gd, Tb, Dy, Ho, Er, Tm, Yb, Lu, Ca, Sr, Sc, Y, Ti, Zr and Hf darstellt, T mindestens ein Element ausgewählt aus der Gruppe bestehend aus V, Nb, Ta, Cr, Mo, Mn, Fe, Co, Zn, Ga, Sn, In, Cu, Si, P and B darstellt und die Indizes $\alpha$, $\beta$, $\gamma$, $\delta$ und $\varepsilon$ Zahlen darstellen, die $0{,}7<\alpha$, $0{,}05<\beta<0{,}15$, $3{,}0\leq\gamma\leq4{,}2$, $0{,}15\leq\delta\leq0{,}30$ beziehungsweise $0\leq\varepsilon\leq0{,}20$ darstellen) und einen Co-Gehalt von gleich oder weniger als 2,0 Massenprozent aufweist,
   der Separator Faser mit einer Sulfor-Gruppe enthält,
   die alkalische Elektrolytlösung Natriumhydroxid als gelöste Hauptsubstanz enthält.

2. Wiederaufladbare Nickelmetallhydridzelle gemäß Anspruch 1, wobei
   die negative Elektrodenplatte ein Substrat mit einer Vernickelungsschicht von 2 $\mu$m oder größerer Dicke, die auf einer Oberfläche gebildet ist, enthält.

3. Wiederaufladbare Nickelmetallhydridzelle gemäß Anspruch 1, wobei
   die alkalische Elektrolytlösung 0 bis 1 Grammäquivalent Kaliumhydroxid, 5 bis 7 Grammäquivalent Natriumhydroxid und 0,3 bis 1,3 Grammäquivalent Lithiumhydroxid pro Liter enthält.

4. Wiederaufladbare Nickelmetallhydridzelle gemäß Anspruch 1, wobei
   eine Beziehung N $\geq[0,5xDmax-2,65]$ erfüllt wird, wobei Dmax ein maximaler Außendurchmesser einer Außenhülse ist, die als das Gehäuse verwendet wird, und N eine Zahl von Wicklungen der gerollten positiven Elektrode ist ([] ist ein Symbol für die Gaußklammer).

5. Wiederaufladbare Nickelmetallhydridzelle, die eine Elektrodenanordnung einschließt, die in einem Gehäuse mit einer alkalischen Elektrolytlösung aufgenommen ist, wobei
   die Elektrodenanordnung eine positive Elektrodenplatte, eine negative Elektrodenplatte und einen Separator einschließt, die zusammen gewickelt sind,
   die positive Elektrodenplatte enthält
   Nickelhydroxidteilchen,
   eine Beschichtungsschicht, die mindestens einen Teil einer Oberfläche jedes Nickelhydroxidteilchens bedeckt und hauptsächlich aus einer Kobaltverbindung mit einer mittleren Wertigkeit von Kobalt größer als 2 aufgebaut ist und
   ein Additiv, das Nb und Y enthält und unter den Nickelhydroxidteilchen verteilt ist,
   die negative Elektrodenplatte enthält
   ein Substrat mit einer Vernicklungsschicht von 2 $\mu$m oder größerer Dicke, die auf einer Oberfläche gebildet ist, und
   Wasserstoffspeicherlegierungsteilchen, die einen Co-Gehalt von gleich oder weniger als 2,0 Massenprozent aufweisen,
   der Separator Faser mit einer Sulfor-Gruppe enthält,
   die alkalische Elektrolytlösung Natriumhydroxid als einen gelösten Hauptbestandteil enthält.

6. Wiederaufladbare Nickelmetallhydridzelle gemäß Anspruch 2, wobei
   die alkalische Elektrolytlösung 0 bis 1 Grammäquivalent Kaliumhydroxid, 5 bis 7 Grammäquivalent Natriumhydroxid und 0,3 bis 1,3 Grammäquivalent Lithiumhydroxid pro Liter enthält.

7.  Wiederaufladbare Nickelmetallhydridzelle gemäß Anspruch 2, wobei
    ein Verhältnis N $\geq$[0,5xDmax-2,65] erfüllt wird, wobei Dmax ein maximaler Außendurchmesser einer Außenhülse ist, die als das Gehäuse verwendet wird, und N eine Anzahl von Wicklungen der positiven gerollten Elektrode ist ([] ist ein Symbol für die Gaußklammer).

8.  Wiederaufladbare Nickelmetallhydridzelle, die eine Elektrodenanordnung einschließt, die in einem Gehäuse mit einer alkalischen Elektrolytlösung aufgenommen ist, wobei
    die Elektrodenanordnung eine positive Elektrodenplatte, eine negative Elektrodenplatte und einen Separator einschließt, die zusammen gewickelt sind,
    die positive Elektrodenplatte enthält
    Nickelhydroxidteilchen,
    eine Beschichtungsschicht, die mindestens einen Teil einer Oberfläche jedes Nickelhydroxidteilchens bedeckt und hauptsächlich aus einer Kobaltverbindung aufgebaut ist, die eine mittlere Wertigkeit von Kobalt größer als 2 aufweist, und
    ein Additiv, das Nb und Y enthält und unter den Nickelhydroxidteilchen verteilt ist,
    die negative Elektrodenplatte eine Wasserstoffspeicherlegierung mit einem Co-Gehalt von gleich oder weniger als 2,0 Massenprozent enthält,
    der Separator Faser mit einer Sulfor-Gruppe enthält,
    die alkalische Elektrolytlösung 0 bis 1 Grammäquivalent Kaliumhydroxid, 5 bis 7 Grammäquivalent Natriumhydroxid und 0,3 bis 1,3 Grammäquivalent Lithiumhydroxid pro Liter enthält.

9.  Wiederaufladbare Nickelmetallhydridzelle gemäß Anspruch 8, wobei
    eine Beziehung N$\geq$[0,5xDmax-2,65] erfüllt wird, wobei Dmax ein maximaler Außendurchmesser einer Außenhülse ist, die als das Gehäuse verwendet wird, und N eine Zahl von Wicklungen der positiven gerollten Elektrode ist ([] ist ein Symbol für die Gaußklammer).

10. Wiederaufladbare Nickelmetallhydridzelle, die einen Elektrodenaufbau einschließt, der in einem Gehäuse mit einer alkalischen Elektrolytlösung aufgenommen ist, wobei
    der Elektrodenaufbau eine positive Elektrodenplatte, eine negative Elektrodenplatte und einen Separator einschließt, die zusammen gewickelt sind,
    eine Beziehung N $\geq$[0,5xDmax-2,65] erfüllt wird, wobei Dmax ein maximaler Außendurchmesser einer Außenhülse ist, die als das Gehäuse verwendet wird, und N eine Zahl von Wicklungen der positiven gerollten Elektrode ist ([] ist ein Symbol für die Gaußklammer),
    die positive Elektrodenplatte enthält
    Nickelhydroxidteilchen,
    eine Beschichtungsschicht, die mindestens einen Teil einer Oberfläche jedes Nickelhydroxidteilchens bedeckt und hauptsächlich aus einer Kobaltverbindung mit einer mittleren Wertigkeit von Kobalt größer als 2 aufgebaut ist und
    ein Additiv, das Nb und Y enthält und unter den Nickelhydroxidteilchen verteilt ist,
    die negative Elektrodenplatte eine Wasserstoffspeicherlegierung mit einem Co-Gehalt von gleich oder weniger als 2,0 Massenprozent enthält,
    der Separator Faser mit einer Sulfur-Gruppe enthält,
    die alkalische Elektrolytlösung Natriumhydroxid als gelöste Hauptsubstanz enthält.

## Revendications

1.  Pile rechargeable au nickel-hydrure métallique comprenant un ensemble d'électrode logé dans un boîtier avec une solution d'électrolyte alcaline, dans laquelle
    l'ensemble d'électrode comprend une plaque d'électrode positive, une plaque d'électrode négative et un séparateur enroulés ensemble,
    la plaque d'électrode positive contenant des particules d'hydroxyde de nickel,
    une couche de revêtement couvrant au moins une partie d'une surface de chaque particule d'hydroxyde de nickel et composée principalement d'un composé de cobalt ayant une valence moyenne de cobalt supérieure à 2, et
    un additif contenant Nb et Y et distribué parmi les particules d'hydroxyde de nickel,
    la plaque d'électrode négative contenant un alliage de stockage d'hydrogène de composition exprimée par la formule générale :

$$((\text{Pr } Nd)_\alpha \, Ln_{1-\alpha})_{1-\beta} \, Mg_\beta \, Ni_{\gamma-\delta-\varepsilon} \, Al_\delta \, T\varepsilon$$

(où Ln représente au moins un élément sélectionné dans le groupe comprenant La, Ce, Pm, Sm, Eu, Gd, Tb, Dy, Ho, Er, Tm, Yb, Lu, Ca, Sr, Sc, Y, Ti, Zr et Hf, T représente au moins un élément sélectionné dans le groupe comprenant V, Nb, Ta, Cr, Mo, Mn, Fe, Co, Zn, Ga, Sn, In, Cu, Si, P et B, et les indices $\alpha$, $\beta$, $\gamma$, $\delta$ et $\varepsilon$ représentent respectivement des nombres satisfaisant $0,7<\alpha$, $0,05<\beta<0,15$, $3,0\leq\gamma\leq4,2$, $0,15\leq\delta\leq0,30$ et $0\leq\varepsilon\leq0,20$), et ayant une teneur en Co égale ou inférieure à 0,2 % en poids,
le séparateur contenant une fibre ayant un groupe sulfo,
la solution d'électrolyte alcaline contenant de l'hydroxyde de sodium comme un soluté principal.

2. Pile rechargeable au nickel-hydrure métallique selon la revendication 1, dans laquelle
la plaque d'électrode négative contient un substrat avec une couche de nickelage d'une épaisseur de 2 $\mu$m ou plus, formée sur une surface.

3. Pile rechargeable au nickel-hydrure métallique selon la revendication 1, dans laquelle
la solution d'électrolyte alcaline contient de 0 à 1 équivalent gramme d'hydroxyde de potassium, de 5 à 7 équivalent gramme d'hydroxyde de sodium et de 0,3 à 1,3 équivalent gramme d'hydroxyde de lithium par litre.

4. Pile rechargeable au nickel-hydrure métallique selon la revendication 1, dans laquelle
une relation $N\geq[0,5\times Dmax-2,65]$ est satisfaite, où Dmax est un diamètre extérieur maximum d'un boîtier extérieur utilisé comme le boîtier et N est un nombre de spires de l'électrode positive enroulée ([] est un symbole pour fonction de plancher).

5. Pile rechargeable au nickel-hydrure métallique comprenant un ensemble d'électrode logé dans un boîtier avec une solution d'électrolyte alcaline, dans laquelle
l'ensemble d'électrode comprend une plaque d'électrode positive, une plaque d'électrode négative et un séparateur enroulés ensemble,
la plaque d'électrode positive contenant des particules d'hydroxyde de nickel,
une couche de revêtement couvrant au moins une partie d'une surface de chaque particule d'hydroxyde de nickel et composée principalement d'un composé de cobalt ayant une valence moyenne de cobalt supérieure à 2, et
un additif contenant Nb et Y et distribué parmi les particules d'hydroxyde de nickel,
la plaque d'électrode négative contenant
un substrat avec une couche de nickelage d'une épaisseur de 2 $\mu$m ou plus, formée sur une surface, et
des particules d'alliage de stockage d'hydrogène ayant une teneur en Co égale ou inférieure à 0,2 % en poids,
le séparateur contenant une fibre ayant un groupe sulfo,
la solution d'électrolyte alcaline contenant de l'hydroxyde de sodium comme un soluté principal.

6. Pile rechargeable à nickel-hydrure métallique selon la revendication 2, dans laquelle
la solution d'électrolyte alcaline contient de 0 à 1 équivalent gramme d'hydroxyde de potassium, de 5 à 7 équivalent gramme d'hydroxyde de sodium et de 0,3 à 1,3 équivalent gramme d'hydroxyde de lithium par litre.

7. Pile rechargeable à nickel-hydrure métallique selon la revendication 2, dans laquelle
une relation $N\geq[0,5\times Dmax-2,65]$ est satisfaite, où Dmax est un diamètre extérieur maximum d'un boîtier extérieur utilisé comme le boîtier et N est un nombre de spires de l'électrode positive enroulée ([] est un symbole pour fonction de plancher).

8. Pile rechargeable au nickel-hydrure métallique comprenant un ensemble d'électrode logé dans un boîtier avec une solution d'électrolyte alcaline, dans laquelle
l'ensemble d'électrode comprend une plaque d'électrode positive, une plaque d'électrode négative et un séparateur enroulés ensemble,
la plaque d'électrode positive contenant des particules d'hydroxyde de nickel,
une couche de revêtement couvrant au moins une partie d'une surface de chaque particule d'hydroxyde de nickel et composée principalement d'un composé de cobalt ayant une valence moyenne de cobalt supérieure à 2, et
un additif contenant Nb et Y et distribué parmi les particules d'hydroxyde de nickel,
la plaque d'électrode négative contenant un alliage de stockage d'hydrogène ayant une teneur en Co égale ou inférieure à 2,0 % en poids,

le séparateur contenant une fibre ayant un groupe sulfo,

la solution d'électrolyte alcaline contenant de 0 à 1 équivalent gramme d'hydroxyde de potassium, de 5 à 7 équivalent gramme d'hydroxyde de sodium et de 0,3 à 1,3 équivalent gramme d'hydroxyde de lithium par litre.

9. Pile rechargeable à nickel-hydrure métallique selon la revendication 8, dans laquelle

une relation $N \geq [0,5 \times Dmax - 2,65]$ est satisfaite, où Dmax est un diamètre extérieur maximum d'un boîtier extérieur utilisé comme le boîtier et N est un nombre de spires de l'électrode positive enroulée ([] est un symbole pour fonction de plancher).

10. Pile rechargeable au nickel-hydrure métallique comprenant un ensemble d'électrode logé dans un boîtier avec une solution d'électrolyte alcaline, dans laquelle

l'ensemble d'électrode comprend une plaque d'électrode positive, une plaque d'électrode négative et un séparateur enroulés ensemble,

une relation $N \geq [0,5 \times Dmax - 2,65]$ étant satisfaite, où Dmax est un diamètre extérieur maximum d'un boîtier extérieur utilisé comme le boîtier et N est un nombre dee spires de l'électrode positive enroulée ([] est un symbole pour fonction de plancher),

la plaque d'électrode positive contenant des particules d'hydroxyde de nickel,

une couche de revêtement couvrant au moins une partie d'une surface de chaque particule d'hydroxyde de nickel et composée principalement d'un composé de cobalt ayant une valence moyenne de cobalt supérieure à 2, et

un additif contenant Nb et Y et distribué parmi les particules d'hydroxyde de nickel,

la plaque d'électrode négative contenant un alliage de stockage d'hydrogène ayant une teneur en Co égale ou inférieure à 2,0 % en poids,

le séparateur contenant une fibre ayant un groupe sulfo,

la solution d'électrolyte alcaline contenant de l'hydroxyde de sodium comme un soluté principal.

# FIG. 1

# FIG. 2

# FIG. 3

# FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP SHO62115657 B